# EUROPEAN PATENT APPLICATION

(11) **EP 1 189 475 A1**
(43) Date of publication of application: **20.03.2002**
(21) Application number: 00917441.8
(22) Date of filing: 24.04.2000
(51) Int. Cl.: H04Q 9/00, H04M 3/42, H04M 11/00, H04N 5/00, G06F 3/00, G06F 17/30

(54) **CELLULAR PHONE AND REMOTE CONTROL SYSTEM**

(71) Applicant: MITSUBISHI DENKI KABUSHIKI KAISHA, Tokyo 100-8310 (JP)
(72) Inventor: FURUSAWA, Haruki, Mitsubishi Denki Kabushiki K., Tokyo 100-8310 (JP); GOTO, Yukio, Mitsubishi Denki Kabushiki Kaisha, Tokyo 100-8310 (JP)
(74) Representative: HOFFMANN - EITLE
(86) International application number: JP0002674
(87) International publication number: WO0182646

(57) **Abstract**

Operation information is transmitted from a portable telephone 1, a central processing unit 5 refers to a data base 6 in which a plurality of remote controller control instructions are stored, a remote controller control instruction corresponding to the operation information is sent back from the central processing unit 5, and an operated apparatus is controlled by the portable telephone 1 according to the remote controller control instruction.

## Description

### TECHNICAL FIELD

The present invention relates to a portable apparatus and a remote control system which can operate various types of electronic apparatuses.

### BACKGROUND ART

Various types of electronic apparatuses such as a television set, a video apparatus, a stereo mini-component, an air conditioner, an illuminator and the like are widely used in domestic households, and these electronic apparatuses are operated in remote control to heighten their operability .

However, management of the remote control unit is complicated by the face that a remote control unit is attached to each electronic apparatus.

Also, in recent years, electronic apparatuses, which can be connected with an internet system, are widely used in domestic households. For example, in the case of a video apparatus capable of being connected with an internet system, even though a user stays outdoors, the programming in the video-recorder to record a certain program can be set by using a portable telephone capable of being connected with the internet system. However, to set the video-recording of a program, the user is required to remotely operate the video apparatus according to a pre-determined procedure, and the pre-determined procedure is generally complicated. Therefore, even though the portable telephone has a function for setting the video-recording of a program externally, men and women of all ages have considerable difficulty in operating the portable telephone.

The above-described remote control system is, for example, disclosed in the Published Unexamined Japanese Patent Application H9-102827 (1997).

Because the conventional remote control system has the above-described configuration, the operability of each electronic apparatus can be heightened. However, because a remote control unit is attached to each electronic apparatus, there is a problem that it is complicated to manage the remote control unit and a cost of each electronic apparatus is heightened.

Also, in cases where a portable telephone capable of being connected with an internet system is used, a user can set the video-recording of a program at the outdoors. However, because the user is required to perform a pre-determined complicated operation, there is another problem that men and women of all ages have considerable difficulty in operating the portable telephone.

The present invention is provided to solve the above problems, and an object of the present invention is to provide a portable apparatus and a remote control system in which a plurality of apparatuses such as electronic apparatuses to be operated are easily operated in remote control without arranging a private remote control unit for each apparatus to be operated.

### DISCLOSURE OF THE INVENTION

In a portable apparatus according to the present invention, operation information input by an inputting means is transmitted to a central processing unit, the central processing unit refers to a data base in which a plurality of remote controller control instructions are stored, the central processing unit sends back the remote controller control instruction corresponding to the operation information, and an apparatus to be operated (hereinafter, called an operated apparatus) is controlled according to the remote controller control instruction.

Therefore, the portable apparatus can easily operate a plurality of operated apparatuses in remote control without arranging a private remote control unit for each operated apparatus.

In a portable apparatus according to the present invention, a voice emitted from a user is input as the operation information to the inputting means.

Therefore, the user can operate each operated apparatus when the user expresses the contents of an operation by word/words.

In a portable apparatus according to the present invention, a moving picture indicating a gesture of a user is input as the operation information to the inputting means.

Therefore, the user can operate each operated apparatus when the user expresses the contents of an operation by sign language or the shaking of user's body.

In a portable apparatus according to the present invention, a letter or a symbol written by a user is input as the operation information to the inputting means.

Therefore, the user can operate each operated apparatus when the user writes a letter or a symbol while using a tablet.

In a portable apparatus according to the present invention, code information indicating letters or symbols is input as the operation information to the inputting means.

Therefore, the user can operate each operated apparatus when the user inputs letters or symbols while using a keyboard.

In a portable apparatus according to the present invention, an external power measured by an acceleration sensor is input as the operation information to the inputting means.

Therefore, the user can operate each operated apparatus when the user takes a certain action. For example, the user shakes the operated apparatus several times.

In a portable apparatus according to the present invention, environment information measured by an environment sensor is input as the operation information to the inputting means.

Therefore, the user can operate each operated apparatus without user's specific operation.

In a remote control system according to the present invention, operation information is transmitted from a portable apparatus, a central processing unit refers to a data base in which a plurality of remote controller control instructions are stored, the central processing unit sends back the remote controller control instruction corresponding to the operation information, and the portable apparatus controls an operated apparatus according to the remote controller control instruction.

Therefore, the remote control system can easily operate a plurality of operated apparatuses by remote control without arranging a private remote control unit for each operated apparatus.

In a remote control system according to the present invention, in cases where no remote controller control instruction coincident with the operation information exists, the central processing unit performs an ambiguous retrieval processing and sends back a remote controller control instruction most suitable for the operation information.

Therefore, even though the user ambiguously expresses the contents of an operation, the user can appropriately operate each operated apparatus.

In a remote control system according to the present invention, the central processing unit learns a correspondence relationship between the operation information and the remote controller control instruction most suitable for the operation information and sends back the remote controller control instruction without performing the ambiguous retrieval processing when the central processing unit receives the same operation information as that of the correspondence relationship next time.

Therefore, even though no remote controller control instruction coincident with the operation information exists, the user can immediately operate each operated apparatus.

In a remote control system according to the present invention, the central processing unit specifies a user of the portable apparatus in cases where the central processing unit has a data base of each of a plurality of users, the central processing unit refers to the data base of the user, and the central processing unit retrieves the remote controller control instruction corresponding to the operation information.

Therefore, an operation suitable for the habits of each user can be performed.

In a remote control system according to the present invention, the central processing unit charges a handling fee according to a use form of the remote controller control instruction used in the portable apparatus.

Therefore, a charge for the use performed by the user, who is a subscriber of this system, can be rationally calculated.

In a remote control system according to the present invention, the portable apparatus denotes a portable telephone.

Therefore, a production cost of the portable apparatus can be reduced.

In a remote control system according to the present invention, the portable apparatus is fixed to the operated apparatus.

Therefore, the portable apparatus can be used as an embedded apparatus.

### BRIEF DESCRIPTION OF THE DRAWINGS

Fig. 1 is a configuration diagram showing a remote control system according to a first embodiment of the present invention.
Fig. 2 is a configuration diagram showing an internal configuration of a portable telephone of the remote control system according to the first embodiment of the present invention.
Fig. 3 is a configuration diagram showing an internal configuration of a portable telephone of the remote control system according to a fourth embodiment of the present invention.
Fig. 4 is a configuration diagram showing an internal configuration of a portable telephone of the remote control system according to a fifth embodiment of the present invention.
Fig. 5 is a configuration diagram showing an internal configuration of a portable telephone of the remote control system according to a sixth embodiment of the present invention.
Fig. 6 is a configuration diagram showing an internal configuration of a portable telephone of the remote control system according to a seventh embodiment of the present invention.

### BEST MODE FOR CARRYING OUT THE INVENTION

Hereinafter, the best mode for carrying out the present invention will now be described with reference to the accompanying drawings to explain the present invention in more detail.

### EMBODIMENT 1

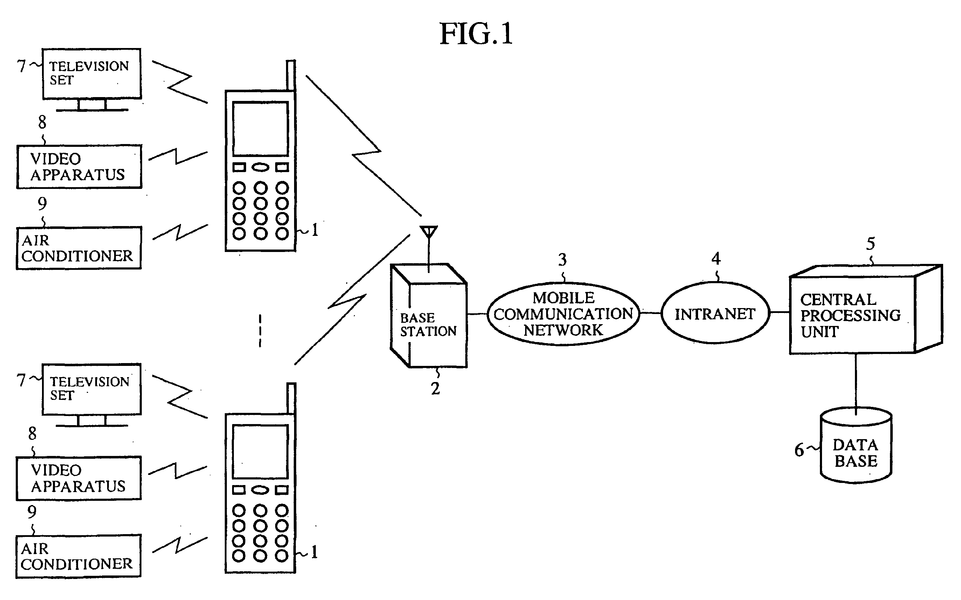

Fig. 1 is a configuration diagram showing a remote control system according to a first embodiment of the present invention. In Fig. 1, 1 indicates a portable telephone (or a portable apparatus) for transmitting operation information to a central processing unit 5 and controlling each of a plurality of apparatuses (hereinafter, called a plurality of operated apparatuses), which are to be operated, according to a remote controller control instruction corresponding to the operation information when the central processing unit 5 refers to a data base 6, in which a plurality of remote controller control instructions are stored, and sends the remote controller control instruction corresponding to the operation information to the portable telephone 1. 2 indicates a base station. 3 indicates a mobile communication network. 4 indicates an intranet. 5 indicates the central processing unit, connected with the intranet 4 or an internet, for receiving the operation information from the portable telephone 1, referring to the data base 6 in which the remote controller control instructions are stored, retrieving the remote controller control instruction corresponding to the operation information from the data base 6 and sending the remote controller control instruction. 6 indicates the database for storing the remote controller control instructions. 7 indicates a television set denoting one of the operated apparatuses. 8 indicates a video apparatus denoting one of the operated apparatuses. 9 indicates an air conditioner denoting one of the operated apparatuses. Here, the present invention is not limited to the operated apparatuses composed of the television set 7, the video apparatus 8 and the air conditioner 9, but it is applicable that a personal computer be included as one operated apparatus.

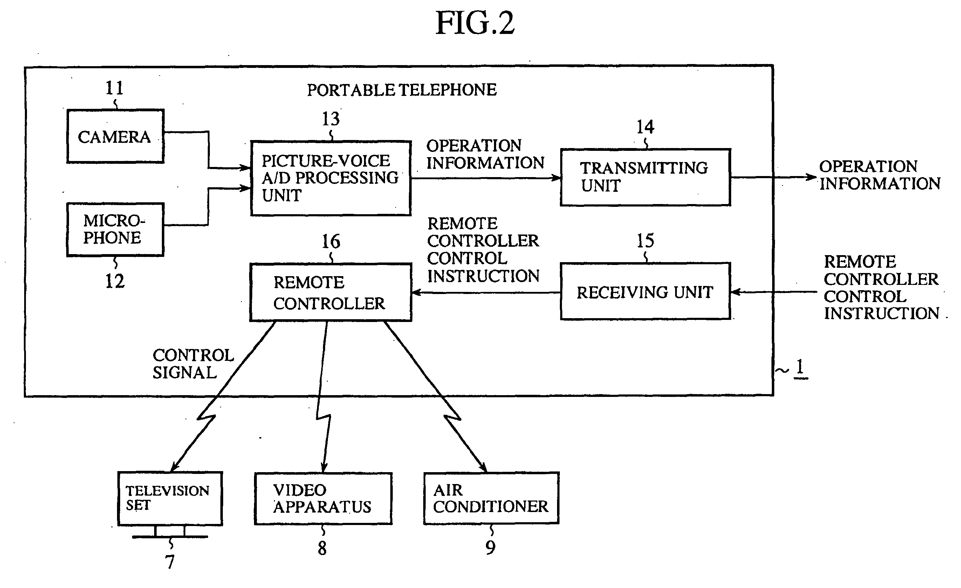

Fig. 2 is a configuration diagram showing an internal configuration of the portable telephone 1. In Fig. 2, 11 indicates a camera for photographing a moving picture indicating a gesture of a user. 12 indicates a microphone for receiving a voice of the user. 13 indicates a picture-voice analog-to-digital (A/D) processing unit for performing either a picture A/D processing for the moving picture photographed by the camera 11 or a voice A/D processing for the voice received in the microphone 12 and producing the operation information. Here, an inputting means is composed of the camera 11, the microphone 12 and the picture-voice A/D processing unit 13.

14 indicates a transmitting unit (or a transmitting means) for transmitting the operation information produced in the picture-voice A/D processing unit 13 to the central processing unit 5. 15 indicates a receiving unit (or a receiving means) for receiving the remote controller control instruction when the central processing unit 5 refers to the data base 6, in which the remote controller control instructions are stored, and sends the remote controller control instruction corresponding to the operation information to the portable telephone 1. 16 indicates a remote controller (or a control means) for controlling each operated apparatus according to the remote controller control instruction received in the receiving unit 15. A control signal is output from the remote controller 16 to each operated apparatus by using a wire means or a radio means (for example, blue-tooth, infrared ray (IR), ultrasonic wave, an HA bus, a local area network (LAN) or UPnP).

Next, an operation is described.

A case where a user operates the air conditioner 9 arranged in his house is described as an example.

In cases where a room temperature is low and the user feels cold, when the user emits, for example, a voice "slightly cold", the voice "slightly cold" of the user is received in the microphone 11 of the portable telephone 1.

Thereafter, when the voice "slightly cold" is received in the microphone 11, a voice signal indicating the voice is output as operation information from the picture-voice A/D processing unit 13 to the transmitting unit 14, and the operation information is output from the transmitting unit 14 to the central processing unit 5 through the base station 2.

When the operation information is received in the central processing unit 5 from the portable telephone 1, the central processing unit 5 refers to the data base 6 in which a plurality of remote controller control instructions are stored, and a remote controller control instruction corresponding to the operation information is retrieved in the central processing unit 5 from the data base 6.

Here, a plurality of remote controller control instructions corresponding to various types of operated apparatuses (the television set 7, the video apparatus 8 and the air conditioner 9) are stored in the data base 6, and there are a plurality of remote controller control instructions corresponding to the air conditioner 9, and the remote controller control instructions corresponding to the air conditioner 9 are indicated as follows as an example. In this case, it is applicable that the operation information be expressed by the Japanese language or a foreign language. Also, it is applicable that the operation information be expressed by combined words of the Japanese language and a foreign language. Also, it is applicable that the operation information be expressed by words which include an ambiguous expression of a deaf-and-dumb person.

| Operation Information | | Remote Controller Control Instruction |
|---|---|---|
| slightly cold | → | rise in temperature by 1 °C |
| very cold | → | rise in temperature by 2 °C |
| slightly hot | → | fall in temperature by 1 °C |
| very hot | → | fall in temperature by 2 °C |

In this example, because the user emits the voice "slightly cold", "rise in temperature by 1°C" is detected as the remote controller control instruction corresponding to the operation information.

Thereafter, the remote controller control instruction denoting "rise in temperature by 1 °C" is sent back from the central processing unit 5 to the air conditioner 9 through the portable telephone 1.

In this example, the remote controller control instruction coincident with the operation information exists. However, in cases where no remote controller control instruction coincident with the operation information exists, an ambiguous retrieval processing is performed, and a remote controller control instruction most suitable for the operation information is sent back.

For example, in cases where the user emits a voice "extremely cold", no remote controller control instruction coincident with the operation information exists. However, in cases where the meaning of the phrase "extremely cold" is considered, the operation information "very cold" is most similar to the phrase "extremely cold" among the four pieces of operation information relating to the air conditioner 9. Therefore, a remote controller control instruction corresponding to the operation information "very cold" is retrieved. That is, "rise in temperature by 2 °C" is retrieved and sent back.

Also, when a remote controller control instruction most suitable for the operation information is retrieved in the ambiguous retrieval processing performed in the central processing unit 5, a correspondence relationship between the operation information and the remote controller control instruction most suitable for the operation information is learned. Thereafter, in cases where the same operation information as that corresponding to the remote controller control instruction in the learned correspondence relationship is received next time, the remote controller control instruction is sent back without performing the ambiguous retrieval processing. Therefore, when the user emits a voice "extremely cold", the remote controller control instruction "rise in temperature by 2°C" is immediately retrieved and sent back without the performance of the ambiguous retrieval processing.

Here, in cases where a similarity between a voice, for example, "channel 4" emitted by the user and each piece of operation information relating to the air conditioner 9 is very low, the central processing unit 5 retrieves no remote controller control instruction relating to the air conditioner 9. However, in cases where the voice "channel 4" coincides with a piece of operation information relating to the television set 7 or in cases where the similarity between the voice "channel 4" and a piece of operation information relating to the television set 7 is high, there is a case where the central processing unit 5 retrieves the remote controller control instruction relating to the television set 7.

Thereafter, when the remote controller control instruction is sent back by the central processing unit 5, the remote controller control instruction is received in the receiving unit 15 of the portable telephone 1 and is output to the remote controller 16.

When the remote controller control instruction transmitted from the receiving unit 15 is received in the remote controller 16 of the portable telephone 1, the air conditioner 9 denoting one operated apparatus is controlled according to the remote controller control instruction. In this example, an operation, in which the central processing unit 5 instructs the air conditioner 9 to perform a rise in temperature by 1 °C, is performed.

As is described above, in the first embodiment, operation information is transmitted from the portable telephone 1, the central processing unit 5 refers to the data base 6 in which a plurality of remote controller control instructions are stored, a remote controller control instruction corresponding to the operation information is sent back to the portable telephone 1, and the portable telephone 1 controls an operated apparatus according to the remote controller control instruction. Therefore, each operated apparatus can be easily operated in remote control without arranging a private remote controller for each operated apparatus.

Also, a plurality of learning results, each of which indicates a correspondence relationship between operation information and a remote controller control instruction most suitable for the operation information, are accumulated in the data base 6, the data base 6 itself can be used as an information source. Therefore, the database 6 can be independently set as a commodity to be sold.

### EMBODIMENT 2

In the first embodiment, a control signal is transmitted one-sidedly from the remote controller 16 to each operated apparatus, and the operated apparatus is operated. However, it is applicable that a response signal transmitted from an operated apparatus be received in the remote controller 16, the response signal be inserted into operation information and be sent to the central processing unit 5, and a remote controller control instruction be sent back to the portable telephone 1 while considering the response signal in the central processing unit 5.

### EMBODIMENT 3

In the first embodiment, a voice emitted by the user is transmitted as operation information to the central processing unit 5. However, it is applicable that a moving picture indicating a gesture of the user be transmitted as operation information to the central processing unit 5. In this case, the same effect as that in the first embodiment can be obtained.

In detail, when a moving picture indicating a gesture of the user is photographed by the camera 11 of the portable telephone 1, a picture processing for the moving picture photographed by the camera 11 is performed in the picture-voice A/D processing unit 13, and the moving picture is transmitted to the central processing unit 5 through the transmitting unit 14.

When operation information (that is, the moving picture) transmitted from the portable telephone 1 is received in the central processing unit 5, the central processing unit 5 refers to the data base 6 in which a plurality of remote controller control instructions are stored, and a remote controller control instruction corresponding to the operation information (that is, the moving picture) is retrieved.

In the third embodiment, because a plurality of moving pictures (for example, a gesture indicating "slightly cold") indicating operations of each operated apparatus are stored in the data base 6, the moving picture transmitted from the portable telephone 1 is collated with each of the moving pictures stored in the data base 6, and a remote controller control instruction coincident with the operation information or a remote controller control instruction most suitable for the operation information is retrieved and sent back to the portable telephone 1.

Therefore, each operated apparatus can be operated by expressing contents of an operation by sign language operated or the shaking of a user's body.

### EMBODIMENT 4

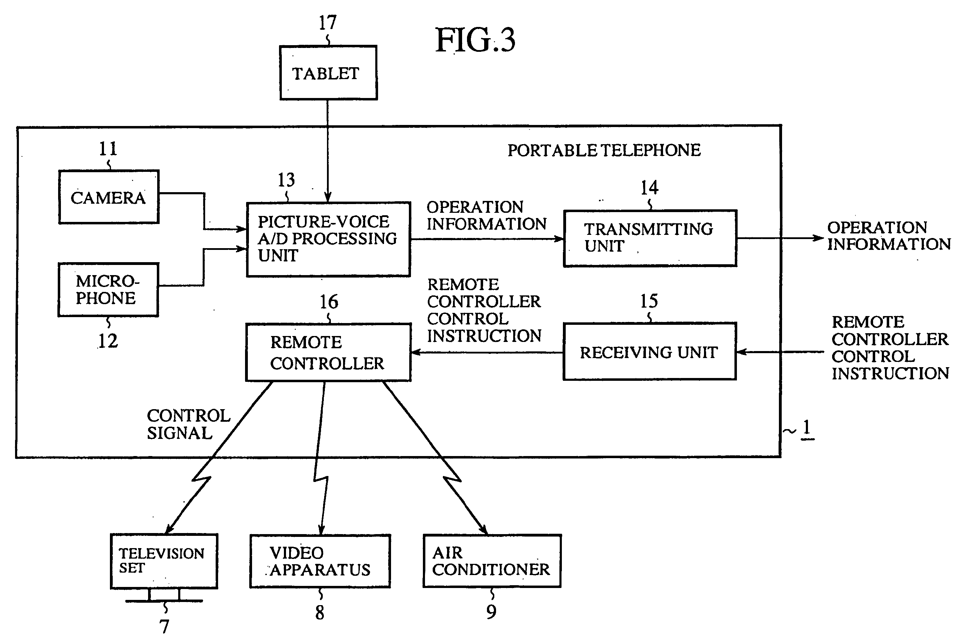

In the first embodiment, a voice emitted by the user is received as operation information. However, as shown in Fig. 3, in cases where a tablet 17 is connected with the portable telephone 1, it is applicable that a user input letters/characters written by the user to the picture-voice A/D processing unit 13 as operation information while using the tablet 17 and the operation information be transmitted to the central processing unit 5.

Therefore, the user can operate each operated apparatus by writing letters/characters or symbols while using the tablet 17.

### EMBODIMENT 5

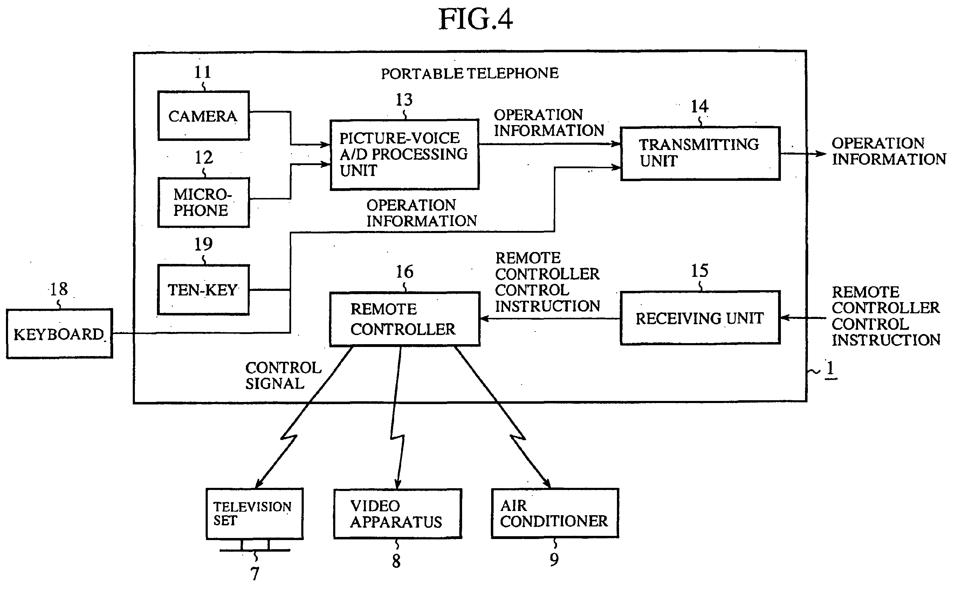

In the first embodiment, a voice emitted by the user is received as operation information. However, as shown in Fig. 4, in cases where a keyboard 18 is connected with the portable telephone 1, it is applicable that a user input code information of letters/characters or symbols as operation information while using the keyboard 18 and the operation information be transmitted to the central processing unit 5.

Also, it is applicable that a user input code information of letters/characters or symbols as operation information while using a ten-key 19 (including dial keys) of the portable telephone 1 and the operation information be transmitted to the central processing unit 5.

Therefore, the user can operate each operated apparatus by inputting letters/characters or symbols while using the keyboard 18 or the ten-key 19.

### EMBODIMENT 6

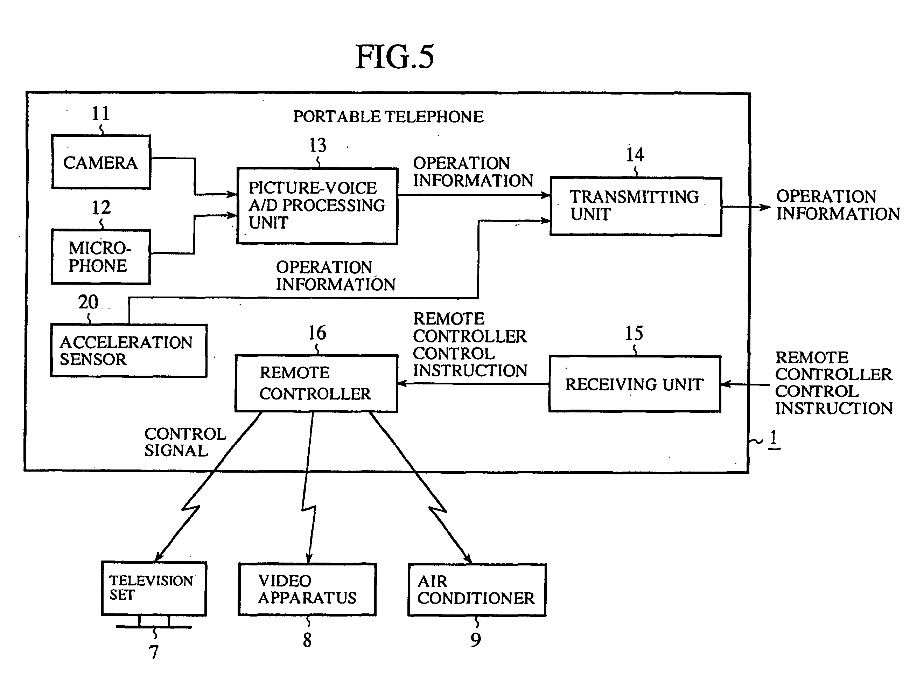

In the first embodiment, a voice emitted by the user is received as operation information. However, as shown in Fig. 5, it is applicable that an acceleration sensor 20 be arranged in the portable telephone 1 so as to output operation information, which indicates a repeated detection of an acceleration (or an external power) higher than a certain strength, in cases where the acceleration is repeatedly detected prescribed times.

Therefore, in cases where the portable telephone is shaken three times, an operation, in which the television set 7 is, for example, switched on, can be performed.

### EMBODIMENT 7

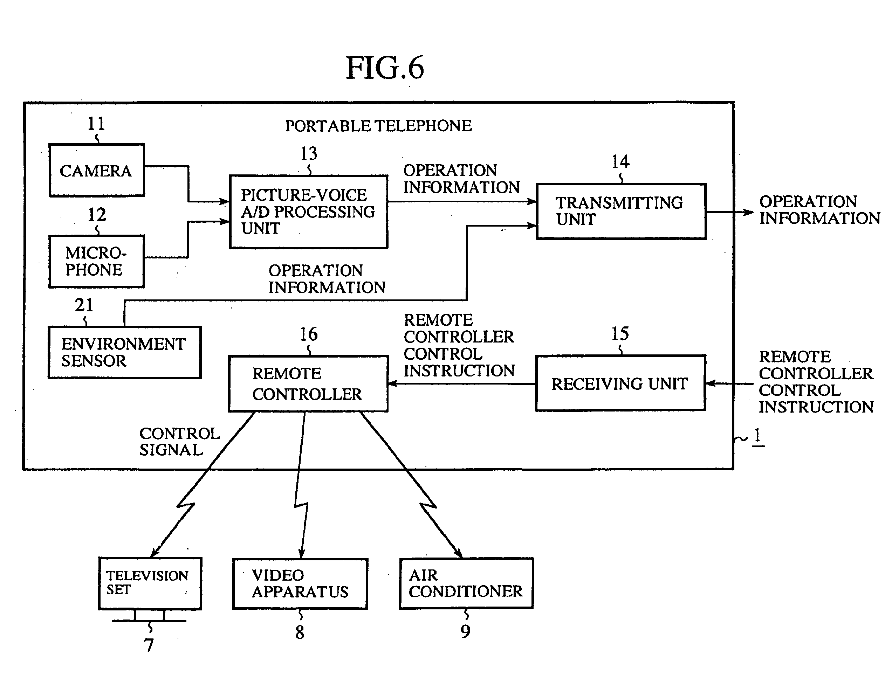

In the sixth embodiment, the acceleration sensor 20 is arranged in the portable telephone 1. However, as shown in Fig. 6, it is applicable that an environment sensor 21 be arranged in the portable telephone 1 so as to measure environment information (for example, temperature, humidity, luminous intensity, CO density and/or smoke).

Therefore, because the environment information can be transmitted to the central processing unit 5 as operation information, the air conditioner 9 or the like can be controlled according to the environment information. Accordingly, the air conditioner 9 or the like can be controlled without user's specific operation.

### EMBODIMENT 8

In the first embodiment, the central processing unit 5 refers to the data base 6, and a remote controller control instruction corresponding to operation information is sent back. However, in cases where the data base 6 is divided into a plurality of data bases respectively corresponding to one user, it is applicable that an authentication processing be performed in the central processing unit 5 according to a voice of a user to specify the user.

Therefore, the central processing unit 5 can refer to the data base of each user, and a remote controller control instruction corresponding to operation information can be retrieved in the central processing unit 5 for each user. Accordingly, an operation adapted to the habits of each user can be performed.

For example, in cases where a user is oversensitive to cold and prefers a warm room, a rise in temperature by 1 °C normally adopted is not adopted, but an operation of a rise in temperature by 2 °C can be performed.

### EMBODIMENT 9

In the first embodiment, a charge for the use performed by the user, who is a subscriber of this system, is not described. However, it is applicable that the central processing unit 5 charge a user a handling fee according to a use form (for example, a type of an operated apparatus, a use time and the like) of a remote controller control instruction used by the portable telephone 1.

Therefore, a charge for the use performed by the user, who is a subscriber of this system, can be rationally calculated.

Also, in cases where an operated apparatus is, for example, an electronic apparatus (for example, a television set, a refrigerator, or an air conditioner) leased, it is applicable that the central processing unit 5 charge a user for a handling fee of an operated apparatus according to operation information transmitted from the portable telephone 1.

Also, in cases where pieces of operation information transmitted from the portable telephone 1 are collected in the central processing unit 5, statistics of demand for each operated apparatus and data of audience rating for each television program can be obtained, and the statistics of demand and the audience rating data can be used as basic data for an electric power demand plan or the editing of television programs.

### EMBODIMENT 10

It is applicable that a portable apparatus be fixed to an operated apparatus. This idea is not described in the first embodiment.

Therefore, the portable apparatus can be used as an embedded apparatus.

### INDUSTRIAL APPLICABILITY

As is described above, in cases where various types of electronic apparatuses are operated, the portable apparatus and the remote control system according to the present invention are appropriate to a plurality of electronic apparatuses which are operated in remote control without arranging a remote control unit for each electronic apparatus.

## Claims

1. A portable apparatus, comprising:
inputting means for inputting operation information;
transmitting means for transmitting the operation information input by the inputting means to a central processing unit;
receiving means for receiving a remote controller control instruction corresponding to the operation information in cases where the central processing unit refers to a data base, in which a plurality of remote controller control instructions are stored, and sends back the remote controller control instruction corresponding to the operation information; and
control means for controlling an operated apparatus according to the remote controller control instruction received by the receiving means.

2. A portable apparatus according to claim 1, wherein a voice emitted from a user is input as the operation information to the inputting means.

3. A portable apparatus according to claim 1, wherein a moving picture indicating a gesture of a user is input as the operation information to the inputting means.

4. A portable apparatus according to claim 1, wherein a letter or a symbol written by a user is input as the operation information to the inputting means.

5. A portable apparatus according to claim 1, wherein code information indicating letters or symbols is input as the operation information to the inputting means.

6. A portable apparatus according to claim 1, wherein an external power measured by an acceleration sensor is input as the operation information to the inputting means.

7. A portable apparatus according to claim 1, wherein environment information measured by an environment sensor is input as the operation information to the inputting means.

8. A remote control system, comprising:
inputting means, arranged in a portable apparatus, for inputting operation information;
transmitting means, arranged in the portable apparatus, for transmitting the operation information input by the inputting means;
a central processing unit for receiving the operation information from the transmitting means, referring to a data base in which a plurality of remote controller control instructions are stored, retrieving a remote controller control instruction corresponding to the operation information and sending back the remote controller control instruction corresponding to the operation information;
receiving means, arranged in the portable apparatus, for receiving the remote controller control instruction from the central processing unit; and
control means, arranged in the portable apparatus, for controlling an operated apparatus according to the remote controller control instruction received by the receiving means.

9. A remote control system according to claim 8, wherein the central processing unit performs an ambiguous retrieval processing, in cases where no remote controller control instruction coincident with the operation information exists, to send back a remote controller control instruction most suitable for the operation information.

10. A remote control system according to claim 9, wherein the central processing unit learns a correspondence relationship between the operation information and the remote controller control instruction most suitable for the operation information and sends back the remote controller control instruction without performing the ambiguous retrieval processing when the central processing unit receives the same operation information as that of the correspondence relationship on a subsequent occasion.

11. A remote control system according to claim 8, wherein the central processing unit specifies a user of the portable apparatus in cases where the central processing unit has a data base of each of a plurality of users, the central processing unit refers to the data base of the user, and the central processing unit retrieves the remote controller control instruction corresponding to the operation information.

12. A remote control system according to claim 8, wherein the central processing unit charges for a handling fee according to a use form of the remote controller control instruction used in the portable apparatus.

13. A remote control system according to claim 8, wherein the portable apparatus denotes a portable telephone.

14. A remote control system according to claim 8, wherein the portable apparatus is fixed to the operated apparatus.
